# EUROPEAN PATENT APPLICATION

(11) **EP 4 560 822 A1**
(43) Date of publication of application: **28.05.2025**
(21) Application number: 23942092.0
(22) Date of filing: 09.10.2023
(51) Int. Cl.: H01M 50/553, H01M 50/564, H01M 50/15, H01M 50/176, H01M 10/04

(54) **BATTERY TERMINAL POST, BATTERY TOP COVER AND BATTERY CELL**

(30) Priority: 19.06.2023 CN 202321565712 U
(71) Applicant: Eve Power Co., Ltd., Jingmen, Hubei 448000 (CN)
(72) Inventor: WANG, Junmin, Jingmen, Hubei 448000 (CN); SHU, Kuanjin, Jingmen, Hubei 448000 (CN); ZHENG, Xu, Jingmen, Hubei 448000 (CN); LIN, Zhibing, Jingmen, Hubei 448000 (CN); AN, Suli, Jingmen, Hubei 448000 (CN); WU, Xueyin, Jingmen, Hubei 448000 (CN); JIA, Yanli, Jingmen, Hubei 448000 (CN); HE, Xiaowu, Jingmen, Hubei 448000 (CN); HUANG, Jinhai, Jingmen, Hubei 448000 (CN)
(74) Representative: Berggren Oy
(86) International application number: PCT/CN2023/123500
(87) International publication number: WO 2024/259825

(57) **Abstract**

A battery terminal post, a battery top cover and a battery cell. The battery terminal post is integrally formed by means of a cold heading proces and comprises a chassis and a terminal post body, which are connected to each other,a first groove being formed on a top portion of the terminal post body, wherein the minimum distance between a groove wall of the first groove and an outer side wall of the terminal post body is C, a distance between a groove bottom of the first groove and the chassis is D, an included angle between the groove wall of the first groove and an axis of the first groove is E, and a groove depth of the first groove is F, FtanE + C being greater than or equal to D.

## Description

The present disclosure claims priority to Chinese Patent Application No. 202321565712.9, filed on June 19, 2023, the disclosure of which is incorporated herein by reference in its entirety.

### TECHNICAL FIELD

The present disclosure relates to the field of batteries, and in particular, to a pole, a battery top cover, and a battery cell.

### BACKGROUND

With the rapid development of electric vehicles and energy storage in recent years, the demand for batteries is increasing. In the related art, the poles are subjected to a friction stir welding process. In this way, the strength of the poles is difficult to be ensured due to the fact that two parts are used to form a composite part through friction.

### SUMMARY

The present disclosure provides a pole, a battery top cover, and a battery cell, so as to improve the torsion resistance of the pole and solve the problem of low strength of the pole.

According to a first aspect, embodiments of the present disclosure provide a pole integrally formed by a cold heading process. The pole includes a chassis and a pole body connected to each other, and a first groove is provided on a top of the pole body (120); wherein a minimum distance between a groove wall of the first groove and an outer side wall of the pole body is C, a distance between a groove bottom of the first groove and the chassis is D, an included angle between the groove wall of the first groove and its axis is E, and a groove depth of the first groove is F, FtanE+C is greater than or equal to D.

According to a second aspect, embodiments of the present disclosure provide a battery top cover including a cover plate assembly, a pressing block, and a pole, wherein a mounting hole is formed on the pressing block, after the pole passes through the cover plate assembly, the pole body matches the mounting hole, and the pressing block and the chassis abut against both sides of the cover plate assembly, respectively.

In a third aspect, embodiments of the present disclosure provide a battery cell including a shell and a battery top cover as described above, wherein the battery top cover is connected to an opening at one end of the shell.

The present disclosure has the following beneficial effects:

The design that the pole is integrally formed by a cold heading process improves the structure strength of the pole. In this way, it is not necessary to assemble the chassis and the pole body. With this design, the assembly process is simplified. Further, the arrangement of the first groove can achieve the effect of weight reduction, thereby reducing the weight of the pole and realizing lightweight design. Since the pole is manufactured by a cold heading process in which the blank is isovolumetrically deformed through cold extrusion, thus forming the pole. The material at the first groove can be moved toward the pole body on both sides by extruding the first groove at the top of the pole body, thereby increasing the height of the pole body to meet the requirements of design size. Further, the limitation that FtanE+C is greater than or equal to D makes the thickness of the groove wall of the pole body greater than or equal to the thickness of the groove bottom of the pole body. Considering that the materials of the pole body are consistent, the strength of the groove wall of the pole body can be greater than or equal to the strength of the groove bottom of the pole body. Thereby reducing the risk of damage of the pole body at the groove wall, making it easier to control the strength at various locations on the pole. Combining with the specific limitation on the size of the pole body, it is helpful to meet the strength requirements of the pole, thereby ensuring the structural stability of the pole, and ensuring that the battery cell applying the pole can operate stably for a long time.

### DESCRIPTION OF THE DRAWINGS

FIG. 1 is a top view of a pole according to Embodiment 1 of the present disclosure.
FIG. 2 is a side view of a pole according to Embodiment 1 of the present disclosure.
FIG. 3 is a cross-sectional view along the A-A plane denoted in FIG. 1.
FIG. 4 is a top view of a pressing block according to Embodiment 1 of the present disclosure.
FIG. 5 is a schematic structural diagram of another pole according to Embodiment 1 of the present disclosure.
FIG. 6 is a schematic structural diagram of still another pole according to Embodiment 1 of the present disclosure.
FIG. 7 is a schematic structural diagram of another pressing block according to Embodiment 1 of the present disclosure.
FIG. 8 is a schematic structural diagram of a battery top cover according to Embodiment 1 of the present disclosure.
FIG. 9 is an exploded view of a battery top cover according to Embodiment 1 of the present disclosure.
FIG. 10 is a schematic structural diagram of a battery cell in which the poles are located on the same side according to Embodiment 1 of the present disclosure.
FIG. 11 is a schematic structural diagram of a battery cell in which the poles are located on different sides according to Embodiment 1 of the present disclosure.
FIG. 12 is a top view of a pole according to Embodiment 2 of the present disclosure.
FIG. 13 is a cross-sectional view along the B-B plane denoted in FIG. 12.

In the drawings:
100. a pole; 110. a chassis; 111. a second groove; 112, a step surface; 113. a step structure; 114. a circumferential side wall of the second groove; 120. a pole body; 121. a first groove; 122, an outer side wall;
200. a pressing block; 210. a square mounting hole; 211. a first welding groove; 220. an elliptical mounting hole; 221. a second welding groove; 230. a hole wall of the mounting hole;
300. a cover plate assembly; 310. an upper plastic member; 320, a cover plate; 321. an explosion-proof valve hole; 330. a lower plastic member;
400. a sealing member; 410, a portion with a small outer diameter; 420, a portion with a large outer diameter;
500. a connecting piece; 510. a step hole;
600. an explosion-proof valve assembly; 610, an explosion-proof sheet; 620. an explosion-proof sheet adhesive film;
700. a first shell; 800. a second shell.

### DETAILED DESCRIPTION

In the description of the present disclosure, it should be noted that, terms such as "center", "above", "below", "left", "right", "vertical", "horizontal", "inside", "outside" refer to the orientation or positional relationship based on the illustration of the appended drawings, and are only for the purpose of facilitating and simplifying the description of the present disclosure, rather than indicating or implying that the apparatus or component referred to must have a particular orientation or must be configured or operated in a particular orientation, therefore should not be construed as a limitation towards the present disclosure. In addition, terms such as "first", "second", "third" are merely for the purpose of description and should not be construed as an indication or implication of relative importance thereof. The terms "first position" and "second position" are two different positions. Moreover, the first feature "on", "above" and "upper" the second feature includes the first feature directly above and obliquely upward the second feature, or merely indicates that a level of the first feature is higher than a level of the second feature. The first feature "lower", "below" and "under" the second feature includes the first feature directly below and obliquely downward the second feature, or merely indicates that a level of the first feature is less than a level of the second feature.

In the description of the present disclosure, it should be noted that, unless specifically defined or restricted otherwise, terms such as "mount", "interconnect", "connect" should be broadly construed, for example, it may be a fixed connection, a detachable connection or an integral connection; it may be a mechanical connection or an electrical connection; it may be either a direct connection or an indirect connection through an intermediate medium, or it may be an internal communication between two units. For a person skilled in the art, the specific meaning of the above terms in the present disclosure may be understood according to specific situations thereof.

Embodiments of the present disclosure are described in detail as follows, the examples of the embodiments are shown in the accompanying drawings, and reference numerals that are the same or similar all along represent same or similar members or members have the same or similar functions. The embodiments that are described with reference to the accompany drawings are examples, and are only used to interpret the present disclosure, instead limiting the present disclosure.

### Embodiment 1

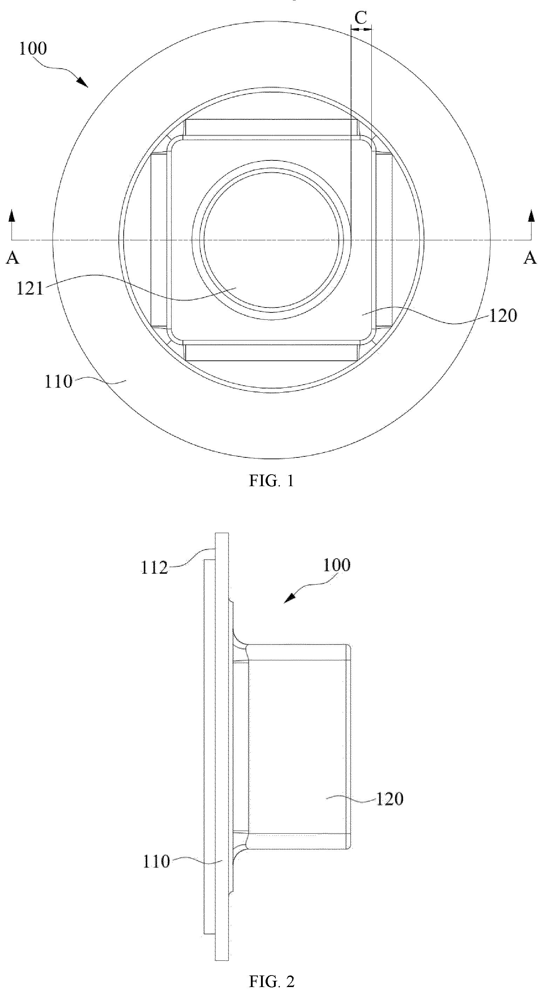

As shown in FIGs. 1 to 3, this embodiment provides a pole 100, which is integrally formed by a cold heading process. The pole 100 includes a chassis 110 and a pole body 120 connected to each other. A first groove 121 is provided on a top of the pole body 120. A minimum distance between a groove wall of the first groove 121 and an outer side wall of the pole body 120 is C, a distance between a groove bottom of the first groove 121 and the chassis 110 is D, an included angle between the groove wall of the first groove 121 and its axis is E, and a groove depth of the first groove 121 is F, wherein FtanE+C is greater than or equal to D.

The design that the pole 100 is integrally formed by a cold heading process improves the structure strength of the pole 100. In this way, it is not necessary to assemble the chassis 110 and the pole body 120. With this design, the assembly process is simplified. Further, the arrangement of the first groove 121 can achieve the effect of weight reduction, thereby reducing the weight of the pole 100 and realizing lightweight design. Since the pole 100 is manufactured by a cold heading process in which the blank is isovolumetrically deformed through cold extrusion, thus forming the pole 100. The materials at the first groove 121 can be moved toward the pole body on both sides by extruding the first groove 121 at the top of the pole body 120, thereby increasing the height of the pole body 120 to meet the requirements of design size. Further, the limitation that FtanE+C is greater than or equal to D makes the thickness of the groove wall of the pole body 120 greater than or equal to the thickness of the groove bottom of the pole body 120. Considering that the materials of the pole body 120 are consistent, the strength of the groove wall of the pole body 120 can be greater than or equal to the strength of the groove bottom of the pole body 120. Thereby reducing the risk of damage of the pole body 120 at the groove wall, making it easier to control the strength at various locations on the pole. Combining with the specific limitation on the size of the pole body 120, it is helpful to meet the strength requirements of the pole 100, thereby ensuring the structural stability of the pole 100, and ensuring that the battery cell applying the pole 100 can operate stably for a long time.

In view of the fact that the selection of the groove bottom size of the pole body 120 is easy grasped by a person skilled in the art based on conventional design experience, it can be known that the groove bottom of the pole body 120 can easily meet the strength requirements of the pole 100. Combining with the limitation that the strength of the groove wall of the pole body 120 is greater than or equal to the strength of the groove bottom of the pole body 120, the strength of the groove wall of the pole body 120 can also directly meet the requirements of the pole 100 without the need for other tests to assist in proof. The above design reduces the difficulty of strength verification of the pole 100, ensures the structural stability of the pole 100, and ensures the stable operation of the pole 100.

The chassis 110 is coaxially arranged with the pole body 120, and the size of the outer edge decreases successively.

C is greater than or equal to 2 mm. Exemplarily, C is 2 mm, 3 mm, 4 mm, 5 mm, 6 mm, or 7 mm, and C is also the minimum wall thickness of the pole body 120. By setting the minimum wall thickness of the pole body 120 within the above range, the structure strength of the pole 100 can be ensured to satisfy the welding strength, thereby ensuring the structure strength of the pole 100.

In other implementations of this embodiment, the shape of the first groove 121 may be, but is not limited to, circular, square, elliptical, or other special-shaped shapes, and may be flexibly set according to requirements, which is not specifically limited herein.

In this embodiment, the size of the outer edge of the chassis 110 is larger than the size of the outer edge of the pole body 120, so that the chassis 110 can abut against the lower surface of the cover plate 320 after the pole body 120 penetrates through the cover plate assembly 300 to form a function for limiting. In other implementations of this embodiment, the chassis 110 and the pole body 120 may be square, elliptical, or other special-shaped shapes, so long as the outer edge size of the chassis 110 is larger than the outer edge size of the pole body 120, which is not specifically limited herein.

In this embodiment, the included angle between the outer side wall 122 of the pole body 120 and its axis is H, and H is greater than 0 degree and less than or equal to 10 degrees. For example, H is 1 degree, 2 degrees, 3 degrees, 4 degrees, 5 degrees, 6 degrees, 7 degrees, 8 degrees, or 9 degrees.

In this embodiment, the included angle between the groove wall of the first groove 121 and the axis thereof is E, and E is greater than 0 degree and less than or equal to 10 degrees. For example, E is 1 degree, 2 degrees, 3 degrees, 4 degrees, 5 degrees, 6 degrees, 7 degrees, 8 degrees, or 9 degrees.

By setting the inclination angle of the outer side wall 122 of the pole body 120 and the inclination angle of the groove wall of the first groove 121 within the above-mentioned range, it can not only prevent the laser from directly burning a lower plastic member 330 during laser welding, but also form an interlocking structure at a bonding surface of the pole body 120 and the pressing block 200, thereby improving the structural strength of the cover plate assembly 300.

As shown in FIGs. 1 to 9, this embodiment further provides a battery top cover, which includes a cover plate assembly 300, a pressing block 200, and the above-mentioned pole 100, wherein a mounting hole is formed on the pressing block 200. After the pole 100 passes through the cover plate assembly 300, the pole body 120 is fitted with the mounting hole, and the pressing block 200 and the chassis 110 are respectively abutted against both sides of the cover plate assembly 300.

In this embodiment, the battery top cover further includes a sealing member 400. The pole 100 and the pressing block 200 are respectively disposed on opposite sides of the cover plate assembly 300. The cover plate assembly 300 includes an upper plastic member 310, a cover plate 320, and a lower plastic member 330 which are sequentially stacked from top to bottom. The pressing block 200 is disposed on one side of the upper plastic member 310 away from the cover plate 320. The upper plastic member 310, the cover plate 320, and the lower plastic member 330 are all provided with through-holes through which the pole 100 for the pole 100 to pass through. The pressing block 200 is provided with a mounting hole. The cover plate 320 in this embodiment is a polished aluminum sheet. The pole 100 is connected with the mounting hole of the pressing block 200 after passing through the through-holes of the lower plastic member 330, the cover plate 320, and the upper plastic member 310 in sequence from bottom to top. Further, the pole 100 and the pressing block 200 are fixed by laser welding. The pressing block 200 abuts against an upper surface of the cover plate assembly 300, and the pole 100 abuts against a lower surface of the cover plate assembly 300. A sealing member 400 is sleeved on the pole 100 to seal the pole 100 and the cover plate 320.

The assembly process of the battery top cover is as follows: firstly, the sealing member 400 is sleeved on an upper portion of the pole 100, then the lower plastic member 330 is placed under the cover plate 320, and the pole 100 to which the sealing member 400 is sleeved is sequentially passed through the lower plastic member 330 and the cover plate 320, so that the chassis 110 at the bottom of the pole 100 abuts against the lower surface of the lower plastic member 330, and then the upper plastic member 310 is placed on the cover plate 320 and sleeved onto the pole 100. After that, the pressing block 200 is placed on the upper plastic member 310 and sleeved onto the pole 100, and pressure is applied to the top of the pole 100 through a jig, so that the materials on the top of the pole 100 is allowed to flow around, thereby closely fitting various components. Further, the pressing block 200 and the pole 100 are connected and fixed through a laser welding process, so that the various component assemblies are fixed as a whole, and the connection is stable. Compared with the riveted top cover, the welding process is simple, the cost is low, which improves the assembly efficiency of the battery top cover, and can also ensure the connection strength of the battery top cover.

It should be noted that the cover plate 320, as the main support member of the battery top cover, is used to carry other components. The upper plastic member 310 is embedded in a gap between the pressing block 200 and the cover plate 320, which plays an insulating role, so that the pressing block 200 is separated from the cover plate 320, thus reducing the probability of external short circuit of the power battery, and improving the safety performance of the power battery. The lower plastic member 330 is located between the cover plate 320 and the chassis 110 of the pole 100, and which isolates the cover plate 320 from the chassis 110 of the pole 100 and plays an insulating role, thus reducing the probability of external short circuit of the battery.

The sealing member 400 is configured as an annular step structure, and a portion 410 with a small outer diameter is embedded in the gap between the cover plate 320 and the pole 100, and an end surface of a portion 420 with a large outer diameter abuts against a lower surface of the cover plate 320, which not only plays a sealing role, but also insulates the cover plate 320 and the pole 100. The sealing member 400 has a certain elasticity and is interference-fitted into the gap between the cover plate 320 and the pole 100, which helps to improve the sealing performance of the overall structure, prevent air from entering the power battery, and prevent electrolyte from leaking out. The sealing member 400 is made of an elastic material with acid and alkali resistance and high temperature resistance, for example, a fluororubber material, which is resistant to corrosion by the electrolyte.

Exemplarily, the number of the poles 100 is set to be two, which are divided into a negative pole and a positive pole. The negative pole and the positive pole are used for conducting with external electric components to realize the conduction of current. Correspondingly, the number of the pressing block 200, the upper plastic member 310, and the sealing member 400 are set to two respectively, so as to be matched with the corresponding poles 100 respectively.

The negative pole is integrally formed by a copper-aluminum composite plate through a cold heading process, and the positive pole is integrally formed by an aluminum plate through a cold heading process. One end of the positive pole needs to be welded and fixed to a positive electrode connecting piece made of aluminum, therefore, the positive pole can be manufactured of a pure aluminum plate. One end of the negative pole needs to be welded and fixed to a negative electrode connecting piece made of copper, therefore, the negative pole can be manufactured of a copper-aluminum composite plate, wherein, the upper portion close to the pole body 120 is made of aluminum, and the lower portion close to the chassis 110 is made of copper, which is used to be welded and fixed to the negative electrode connecting piece made of copper. Since the negative pole is made of a copper-aluminum composite plate, wherein an upper portion close to the pole body 120 is made of aluminum, and a lower portion close to the chassis 110 is made of copper, so as to be welded and fixed with the copper negative electrode connecting piece. Since the negative pole is formed by a copper-aluminum composite plate through the cold heading process, the traditional friction welding connection process is eliminated, thus saving cost. Due to the use of the copper-aluminum composite plate, the amount of copper materials is also reduced, and the weight of the battery top cover is reduced.

The battery top cover further includes connecting pieces 500 provided on one side of the lower plastic member 330 away from the cover plate 320. The number of the connecting piece 500 is set to two, namely, a positive electrode connecting piece and a negative electrode connecting piece, respectively. The connecting pieces 500 are configured in a bending structure. One end of the positive electrode connecting piece is used to be fixedly connected to the bottom of the positive pole, and the other end of the positive electrode connecting piece is used to be connected to a positive tab of the battery cell. One end of the negative electrode connecting piece is used to be connected to the bottom of the negative pole, and the other end of the negative electrode connecting piece is used to be connected to a negative tab of the battery cell. In this way, conduction of current is achieved. It should be noted that, since the positive electrode connecting piece needs to be welded and fixed to the positive tab made of aluminum, the positive electrode connecting piece is preferably made of aluminum, and the negative electrode connecting piece needs to be welded and fixed to the negative tab made of copper, the negative electrode connecting piece is preferably made of copper.

Exemplarily, a second groove 111 is formed at a bottom of the chassis 110. Firstly, the materials at the second groove 111 can be moved toward the chassis 110 on both sides during the extrusion process by extruding the second groove 111 at the bottom of the chassis 110, so that the size of the chassis 110 can be larger, and the size around the second groove 111 can be fuller to meet the size requirements. Secondly, since the negative pole is made of a copper-aluminum composite plate through a cold heading process, in the process of extruding the blank, due to different hardness of the copper and aluminum materials (the hardness of copper is greater than that of aluminum), the copper materials will extrude the aluminum materials, so that a wavy bonding surface is easily formed at the junction of the copper and aluminum materials, thereby affecting the structural strength of the negative pole. By extruding the second groove 111 at the bottom of the chassis 110, the copper-aluminum composite sheet provides a flow space for the copper materials during isovolumetric deformation process, reducing the extrusion of the copper materials on the aluminum materials, making the bonding surface of the copper-aluminum materials smoother, thereby ensuring the structural strength of the negative pole, and making the root of the negative pole not easy to break. The shape of the second groove 111 may be, but is not limited to, circular, square, elliptical, or other special-shaped shapes, and may be flexibly set according to requirements, which is not specifically limited herein.

The axial section of the second groove 111 is arched, and an angle α between a circumferential side wall 114 of the second groove and a horizontal plane is greater than or equal to 15 degrees and less than or equal to 60 degrees. Exemplarily, the angle α is 15 degrees, 20 degrees, 25 degrees, 30 degrees or 40 degrees. By setting the inclination angle of the circumferential side wall 114 of the second groove 111 within the above range, better fluidity can be provided for the copper materials in the copper-aluminum composite plate, so that the root of the negative pole is not easy to break during the integral molding process, thereby ensuring the structural strength of the negative pole.

In this embodiment, an edge of the chassis 110 is configured as a step structure 113, and a step hole 510 is formed on the connecting piece 500, the step structure 113 matches the step hole 510. The step structure 113 enables the chassis 110 to have two sections with different outer diameters, and a step surface 112 is formed on the step structure 113. The step hole 510 also includes two holes with different holes. In a case that the chassis 110 is matched with the connecting piece 500, the portion of the chassis 110 with a small outer diameter penetrates through the hole with a small hole in the step hole 510, a portion of the chassis 110 with a large outer diameter is engaged with the aperture having a larger aperture in the stepped hole 510, and the stepped surface 112 of the chassis 110 is matched with the step surface of the step hole 510. With this arrangement, the positioning effect between the chassis 110 and the connecting piece 500 can be improved, and the mutual movement between the chassis 110 and the connecting piece 500 can be restricted after assembly, so as to facilitate the subsequent assembly and welding process.

The battery top cover also includes an explosion-proof valve assembly 600, which includes an explosion-proof sheet 610 and an explosion-proof sheet adhesive film 620. The explosion-proof sheet 610 is assembled in the explosion-proof valve hole 321 of the cover plate 320 through a welding process, in this way, the explosion-proof sheet 610 can automatically and quickly release the pressure of the battery in a case that the internal pressure of the battery rises, thereby avoiding occurrence of safety accidents caused by explosion of the power battery. The explosion-proof sheet adhesive film 620 plays a role in protecting the explosion-proof sheet 610, and preventing external dust, water or other impurities from entering the explosion-proof sheet 610.

In this embodiment, an inclination direction of a hole wall 230 of the mounting hole is the same as that of the outer side wall of the pole body 120, an inclination angle of the hole wall 230 of the mounting hole is the same as that of the outer side wall of the pole body 120, and the outer side wall of the pole body 120 fits closely with the hole wall 230 of the mounting hole.

In this embodiment, the axis of the pole 100 is perpendicular to the lower plastic member 330, and the outer side wall of the pole body 120 is disposed obliquely with respect to the axis of the pole 100. In this embodiment, the outer side wall of the pole 100 is obliquely disposed from bottom to top toward the inside of the pole 100. In other implementations of this embodiment, the outer side wall of the pole 100 may also be obliquely disposed from bottom to top in a direction away from the pole 100. The hole wall arrangement 230 of the mounting hole may be disposed in the same inclination direction and inclination angle. The outer side wall of the pole body 120 is inclined, and the hole wall 230 of the mounting hole is alos inclined, so that the pole 100 is matched with the mounting hole through the inclined plane. On the one hand, the inclined surface prevents the lower plastic member 330 from being burned by direct laser during laser welding process. On the other hand, the joint surface between the pole body 120 and the pressing block 200 can be interlocked by the inclined surface, thereby improving the structural strength of the cover plate assembly 300.

Exemplarily, a surface of the pressing block 200 is provided with a welding groove communicating with a peripheral side of the mounting hole, and the welding groove is used for accommodating a welding residual portion. The upper surface of the pressing block 200 is disposed higher than the upper surface of the pole 100, and the welding groove is located above the mounting hole and is diaposed coaxially with the mounting hole, and the radial dimension of the welding groove is greater than that of the mounting hole, thus forming a step structure at the top of the pressing block 200. When welding the pressing block 200 and the pole 100, welding is performed at the top of the pressing block 200 along the joint of the pole 100 and the pressing block 200, in this way, the aluminum materials at the top of the pole 100 is extruded to form a welding residual portion during welding. The welding groove is used for accommodating a welding residual portion extruded by welding, and prevents the welding residual portion from protruding from the upper surface of the pressing block 200, thereby ensuring the appearance smoothness and aesthetic appearance of the battery top cover.

In the related art, considering the utilization rate and cost of materials, composite parts are generally cylindrical after forming and have no torsion resistance.

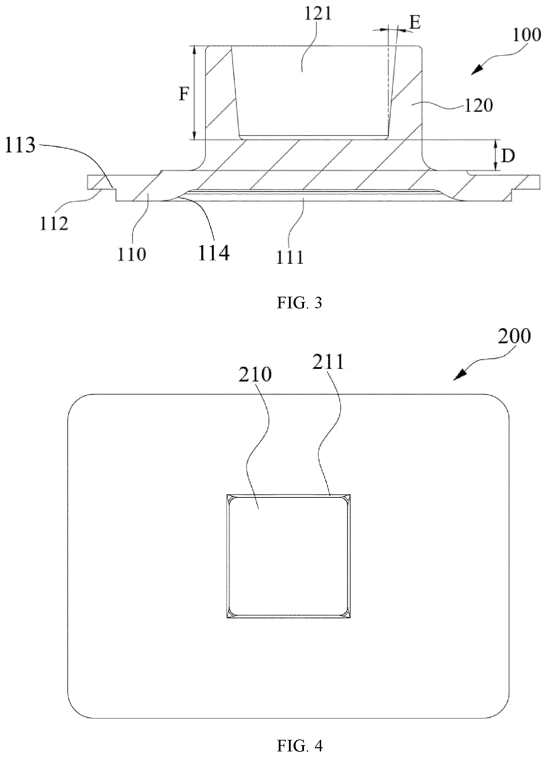

In this embodiment, as shown in FIGs. 1 to 3, the a projection of the mounting hole in an axial direction of the pole body 120 is square. As shown in FIG. 4, the projection of the pole body 120 in the axial direction of the pole body 120 is square. The mounting hole through which the pressing block 200 penetrates is a square mounting hole 210, and the welding groove around the square mounting hole 210 is a first welding groove 211.

Continuing to refer to FIGs. 1 to 9, through the special-shaped design of the mounting hole and the pole body 120, it possible to achieve a structural improvement design for strengthening the torsion resistance of the battery top cover, thereby improving the torsion resistance of the pole body 120, and meanwhile eliminating the positioning feature of the connecting piece 500. After the pole body 120 and the connecting piece 500 are welded and then welded to the pressing block 200, since the contact portions between the pole body 120 and the pressing block 200 are square surfaces, the torsional strength is high, which greatly reduces the influence of shaking of busbars in the module level, and at the same time, the connecting piece 500 does not need to be positioned through the lower plastic member 330 or other features.

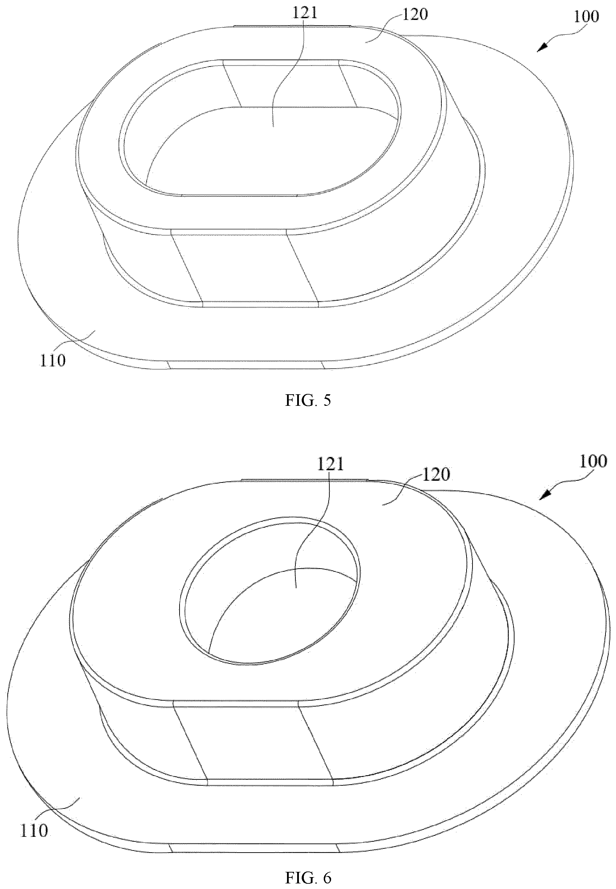

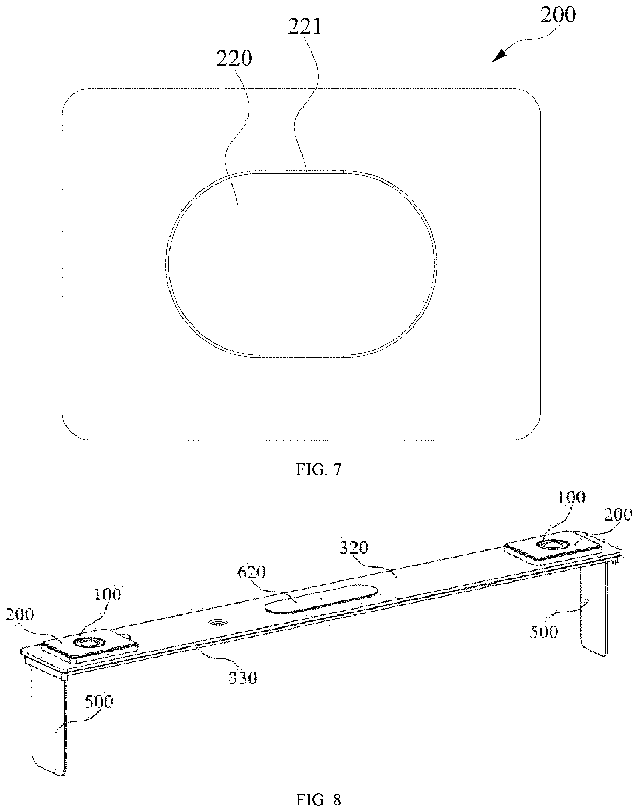

In other implementations of this embodiment, the projection of the mounting hole in an axial direction of the pole body 120 is elliptical, and the projection of the pole body 120 in the axial direction of the pole body 120 is elliptical. The following specific structures are included. As shown in FIG. 5, in another implementation of this embodiment, the projection of the pole body 120 in the axial direction of the pole body 120 is elliptical, and the projection of the first groove 121 in the axial direction of the pole body 120 is elliptical. As shown in FIG. 6, in yet another implementation of this embodiment, the projection of the pole body 120 in the axial direction of the pole body 120 is elliptical, and the projection of the first groove 121 in the axial direction of the pole body 120 is circular. The above-mentioned two pole bodies 120 are all adapted to the pressing block 200 shown in FIG. 7. The mounting hole through which the pressing block 200 penetrates is an elliptical mounting hole 220, and the welding groove around the elliptical mounting hole 220 is a second welding groove 221.

The technical effects achieved by the above structural improvement is substantially the same as the content of the above-mentioned square surface matching structure. The specific type selection is determined by a person skilled in the art according to actual situations. The specific determination method is a conventional technical means in the art, and details are not described herein.

In other embodiments, the shape of the welding groove may also be square, elliptical, or other special-shaped, as long as the size of the outer edge of the welding groove is larger than the size of the outer edge of the mounting hole, which is not specifically limited herein.

As shown in FIGs. 1 to 11, this embodiment further provides a battery cell including a shell and the battery top cover as described above, wherein the battery top cover is connected to an opening at one end of the shell.

A cell pack is disposed in the shell, and the battery top cover is buckled at the opening end of the shell. The shell is used to accommodate the core pack and provide effective restraint and protection for the core pack. The shell may be made of conductive metallic materials, such as aluminum, aluminum alloy, and the like, and the battery top cover may be sealingly connected with the shell by welding.

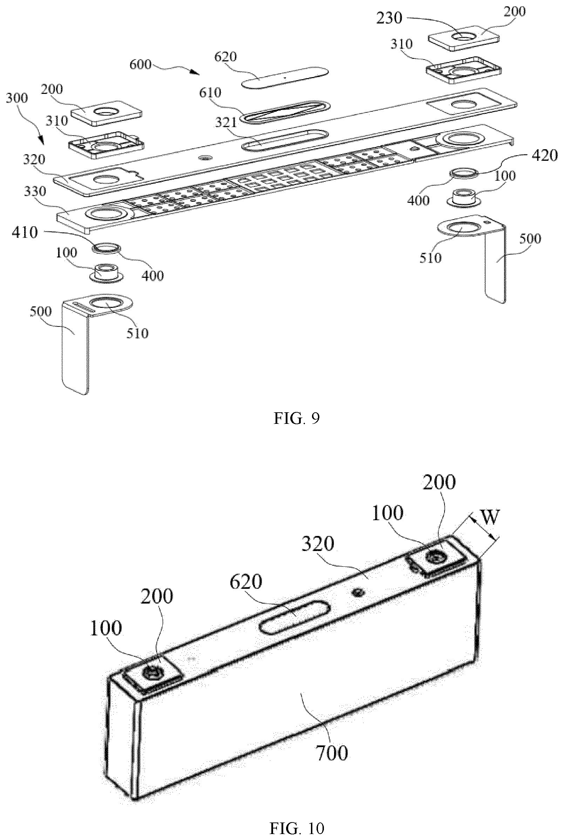

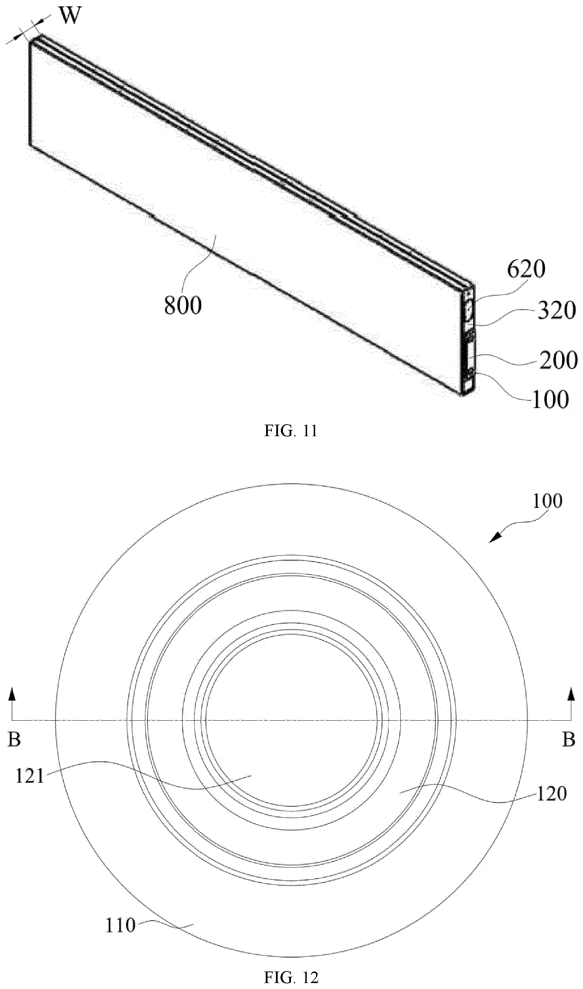

As shown in FIG. 10, there is a model in which the poles 100 are located on the same side of the shell, and this shell is defined as the first shell 700. As shown in FIG. 11, there is a model in which the poles 100 are separated on both sides of the shell, and this shell is defined as the second shell 800.

### Embodiment 2

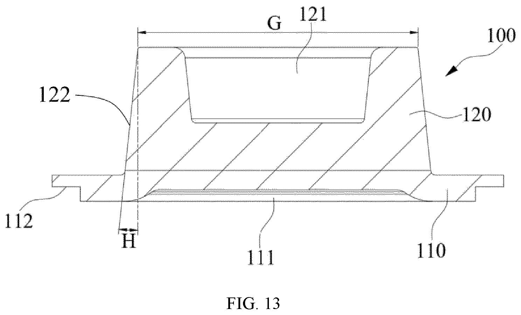

As shown in FIGs. 10 to 13, the battery cell in embodiment 2 is basically the same as that in embodiment 1. The difference between the two is that the pole body 120 is a cylinder, the diameter of one end of the pole body 120 away from the chassis is G, the volume of the shell is V, and the surface area of the shell is S.

Currently, the design of the pole 100 on the battery cell mainly has the following shortcomings and deficiencies:
1) The design of the pins on the battery cell does not take into account the overcurrent capacity of the pins. In a case that the same poles 100 are used, if the capacity (volume) of the poles 100 increases, the temperature of the pole 100 will increase, thus causing thermal runaway or burning of the sealing member 400, which affects the sealing performance.
2) The design of the pins on the existing battery cells does not take into account the heat transfer capability of the pins. In a case that the surface area of the battery cell decreases, the diameter of the pole 100 decreases accordingly, which makes it difficult to dissipate the heat of the battery cell, and eventually increases the temperature of the pole 100, thus causing thermal runaway or burning of the sealing member 400, which affects the sealing performance.

In this embodiment, G/V is greater than 5×10⁻⁷ mm⁻² and less than 4×10⁻⁷ mm⁻²; G/S is greater than 5×10⁻⁵ mm⁻¹ and less than 0.01 mm⁻¹.

By limiting the ratios and sizes between G, V and S, the relationship between the sizes is controlled, which can not only ensure the sealing performance of the battery cell under the condition of long-term high current; but also can ensure the heat conduction capacity and overcurrent capacity inside the battery cell, thereby improving the use safety of the battery cell.

In this embodiment, the thickness of the shell is W, and W is equal to or greater than (G+4) mm.

The size relationship between G and W is determined by the above-mentioned limitation on the size between G and W. Considering that when battery top cover is mounted on the shell, the pole body 120 penetrates through the lower plastic member 330, the length of the lower plastic member 330 is the smallest in the direction perpendicular to the length direction of the lower plastic member 330, and the minimum minimum value of the distance between the outer side wall of the pole body 120 and the edges on both sides of the lower plastic member 330 is set to be 0.7 mm, and the thickness of each location on the shell is set to be 0.3 mm. The lower plastic member 330 is closely connected to the opening of the shell by high-temperature welding. In order to avoid melting of the lower plastic member 330 due to high temperature during welding, it is necessary to leave a gap of at least 1 mm between each edge of the lower plastic member 330 and the inner wall of the shell. Therefore, a space of at least 2 mm needs to be left on both sides of the pole body 120, that is, W needs to be at least 4 mm larger than G.

## Claims

1. A pole comprising a chassis (110) and a pole body (120) connected to each other, and a first groove (121) being provided on a top of the pole body (120); wherein a minimum distance between a groove wall of the first groove (121) and an outer side wall of the pole body (120) is C, a distance between a groove bottom of the first groove (121) and the chassis (110) is D, an included angle between the groove wall of the first groove (121) and its axis is E, and a groove depth of the first groove (121) is F, FtanE+C is greater than or equal to D.

2. The pole according to claim 1, wherein the pole (100) is integrally formed by a cold heading process.

3. The pole according to claim 1, wherein the pole (100) is a copper-aluminum composite plate.

4. The pole according to claim 3, wherein the pole body (120) is made of aluminum and the chassis (110) is made of copper.

5. The pole according to claim 1, wherein a second groove (111) is formed at a bottom of the chassis (110).

6. The pole according to claim 5, wherein an axial section of the second groove (111) is arched, and an angle α between a circumferential side wall (114) of the second groove (111) and a horizontal plane is greater than or equal to 15 degrees and less than or equal to 60 degrees.

7. The pole according to claim 1, wherein an included angle between an outer side wall (122) of the pole body (120) and its axis is H, and H is greater than 0 degree and less than or equal to 10 degrees.

8. A battery top cover comprising a cover plate assembly (300), a pressing block (200) and a pole (100) according to any one of claims 1 to 7, wherein a mounting hole is formed on the pressing block (200), after the pole (100) passes through the cover plate assembly (300), the pole body (120) matches the mounting hole, and the pressing block (200) and the chassis (110) abut against both sides of the cover plate assembly (300), respectively.

9. The battery top cover according to claim 8, wherein an inclination direction of a hole wall (230) of the mounting hole is a same as that of the outer side wall (122) of the pole body (120), an inclination angle of the hole wall (230) of the mounting hole is a same as that of the outer side wall (122) of the pole body (120), and the outer side wall (122) of the pole body (120) fits closely with the hole wall (230) of the mounting hole.

10. The battery top cover according to claim 9, wherein the cover plate assembly (300) comprises an upper plastic member (310), a cover plate (320) and a lower plastic member (330) stacked in sequence from top to bottom, and the pole (100) and the pressing block (200) are fixed by laser welding.

11. The battery top cover according to claim 10, further comprising a sealing member (400) configured as an annular step structure, a portion of the sealing member (400) with a small outer diameter (410) being embedded in a gap between the cover plate (320) and the pole (100), an end surface of a portion of the sealing member (400) with a large outer diameter (420) being abutted against a lower surface of the cover plate (320).

12. The battery top cover according to claim 8, further comprising a connecting piece (500), wherein an edge of the chassis (110) is configured as a step structure (113), and a step hole (510) is formed on the connecting piece (500), the step structure (113) matches the step hole (510).

13. The battery top cover according to claim 8, wherein a surface of the pressing block (200) is provided with welding grooves communicating with a peripheral side of the mounting hole, and the welding grooves are used for accommodating a welding residual portion.

14. The battery top cover according to claim 8, wherein a projection of the mounting hole in an axial direction of the pole body (120) is square, and a projection of the pole body (120) in the axial direction of the pole body (120) is square.

15. The battery top cover according to claim 8, wherein a projection of the mounting hole in the axial direction of the pole body (120) is elliptical, and a projection of the pole body (120) in the axial direction of the pole body (120) is elliptical.

16. A battery cell comprising a shell and the battery top cover according to any one of claims 8 to 15, wherein the battery top cover is connected to an opening at one end of the shell.

17. The battery cell according to claim 16, wherein the pole body (120) is a cylinder, a diameter of one end of the pole body (120) away from the chassis (110) is G, a volume of the shell is V, and G/V is larger than 5×10⁻⁷ mm⁻² and smaller than 4×10⁻⁷ mm⁻².

18. The battery cell according to claim 16, wherein the pole body (120) is a cylinder, a diameter of one end of the pole body (120) away from the chassis (110) is G, a surface area of the shell is S, and the G/S is larger than 5×10⁻⁵ mm⁻¹ and smaller than 0.01 mm⁻¹.

19. The battery cell according to claim 16, wherein the pole body (120) is a cylinder, a diameter of one end of the pole body (120) away from the chassis (110) is G, a thickness of the shell is W, and W is equal to or greater than (G+4) mm.
